Europäisches Patentamt

European Patent Office

Office européen des brevets

(11) Numéro de publication : **0 449 683 A1**

## (12) DEMANDE DE BREVET EUROPEEN

(21) Numéro de dépôt : **91400560.8**

(22) Date de dépôt : **28.02.91**

(51) Int. Cl.⁵ : **B60R 25/10, G08B 29/16**

(30) Priorité : **01.03.90 FR 9002592**

(43) Date de publication de la demande :
**02.10.91 Bulletin 91/40**

(84) Etats contractants désignés :
**AT BE CH DE ES FR GB GR IT LI LU NL SE**

(71) Demandeur : **Sté TEXTON**
**232 rue de Noisy le Sec**
**F-93170 Bagnolet (FR)**

(72) Inventeur : **Aigouy, Michel**
**248, Rue de Noisy-le-Sec**
**F-93170 Bagnolet (FR)**
Inventeur : **Krier, Antoine**
**248, Rue de Noisy-le-Sec**
**F-93170 Bagnolet (FR)**
Inventeur : **Iznasni, Djamel**
**248, Rue de Noisy-le-Sec**
**F-93170 Bagnolet (FR)**

(74) Mandataire : **Berger, Helmut et al**
**Cabinet Z. WEINSTEIN 20, avenue de**
**Friedland**
**F-75008 Paris (FR)**

(54) **Procédé pour conditionner un système de protection contre des intrusions et vols, notamment pour véhicule automobile.**

(57)    L'invention concerne un procédé pour conditionner un système de protection contre des intrusions et vols, notamment pour véhicule.

Le système est adapté pour être mis en veille à la suite d'une action de la part du conducteur du véhicule telle que la coupure de contact à l'aide de la clé de contact et la fermeture des portes du véhicule et pour déclencher une alarme à la suite de la détection d'une condition d'alarme. Le procédé est caractérisé en ce que l'on utilise un détecteur de présence (8) susceptible d'analyser l'intérieur du véhicule pour détecter la présence d'une personne dans celui-ci et conditionne le dispositif de protection (1) d'une façon prédéterminée lorsque la présence d'une personne a été détectée pendant un intervalle de temps de validation après la mise en veille du système.

L'invention est utilisable par des véhicules automobiles.

FIG. 1

EP 0 449 683 A1

# PROCEDE POUR CONDITIONNER UN SYSTEME DE PROTECTION CONTRE DES INTRUSIONS ET VOLS, NOTAMMENT POUR VEHICULE AUTOMOBILE, ET UN SYSTEME POUR LA MISE EN OEUVRE DE CE PROCEDE

L'invention concerne un procédé pour conditionner un système de protection contre des intrusions et vols, notamment pour véhicule automobile, et un système pour la mise en oeuvre de ce procédé.

Le système que l'invention vise à conditionner est adapté pour être mis en veille à la suite d'une action de la part du conducteur du véhicule, telle que la coupure de contact à l'aide de la clé de contact et la fermeture des portes du véhicule et pour déclencher une alarme à la suite de la détection d'une condition d'alarme telle que l'ouverture non autorisée d'une porte ou du coffre ou de la détection à l'intérieur du véhicule d'un changement d'état.

Or, jusqu'à présent aucune solution simple n'a été trouvée au problème qui se pose lorsqu'après la fermeture des portes et la mise en veille du système une ou plusieurs personnes demeurent à l'intérieur du véhicule. La présence de ces personnes devrait normalement être reconnue par le détecteur volumétrique et interprêtée par le système comme constituant une condition devant occasionner le déclenchement d'une alarme. D'autre part, certains véhicules sont équipés d'un dispositif de verrouillage définitif par exemple par voie électrique, pneumatique ou analogue des portes si bien que celles-ci soient condamnées, ce qui priverait les personnes à l'intérieur du véhicule de toute possibilité d'ouvrir ces portes.

L'invention a pour but de proposer une solution simple au problème qui vient d'être énoncé.

Pour atteindre ce but, on utilise un détecteur de présence qui est susceptible d'analyser l'intérieur du véhicule et conditionne le système d'une façon prédéterminée lorsque la présence d'une personne a été détectée pendant un intervalle de temps prédéterminé après la mise en veille du système.

Selon une caractéristique avantageuse de l'invention, pour éviter la fermeture définitive des portes du véhicule lorsque celui-ci est équipé d'un dispositif de verrouillage définitif, à la suite d'une mise en veille, on conditionne le système pour qu'il inhibe le verrouillage définitif si la présence d'une personne a été détectée.

Selon une autre caractéristique avantageuse de l'invention, on inhibe la détection de la présence d'une personne dans le véhicule après l'intervalle de temps précité, lorsqu'une telle présence a été détectée pendant cet intervalle.

Le dispositif pour la mise en oeuvre de ce procédé est caractérisé en ce qu'il comporte un agencement de circuit logique produisant un signal de conditionnement du système lorsque coïncident un signal représentatif de l'état de veille, un signal de détection d'une personne à l'intérieur du véhicule et un signal représentatif de l'intervalle de temps précité.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels.

La figure 1 est une vue schématique d'un système de protection contre des intrusions et des vols, notamment pour véhicule automobile, équipé d'un dispositif de conditionnement selon l'invention.

Les figures 2 et 3 sont des schémas de différents signaux à ET de deux situations auxquelles est exposé le dispositif selon la figure 1 équipant un véhicule pourvu d'un dispositif de fermeture définitive des portes.

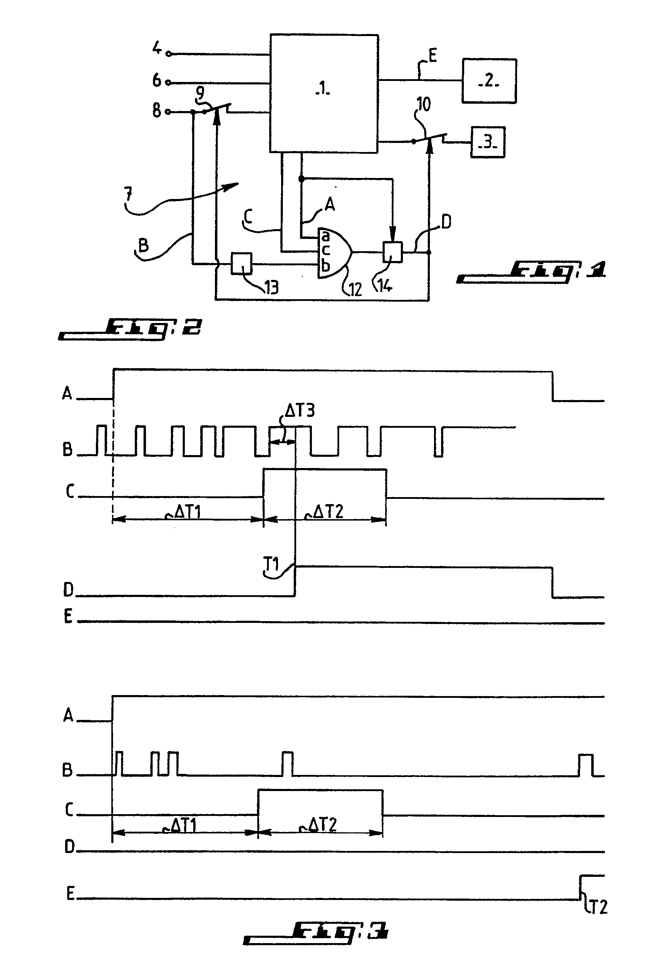

Sur la figure 1 on a représenté en 1 le dispositif de protection contre des intrusions et des vols d'un véhicule automobile, tandis que les chiffres de référence 2 et 3 désignent respectivement un dispositif générateur d'une alarme et le dispositif de verrouillage définitif des portes, tous les deux commandés par le dispositif de protection 1. A celui-ci sont associés un certain nombre de détecteurs d'une condition d'alarme tel que par exemple un détecteur d'ouverture des portes 4 et un détecteur volumétrique 6. Le symbole de référence 7 indique de façon générale le dispositif de conditionnement du système représenté à la figure 1 en fonction de la présence ou absence d'une ou de plusieurs personnes à l'intérieur du véhicule. Le dispositif de protection 1 est connu en soi et pourrait être celui qui est décrit dans la demande de brevet français N° 88 10 758.

Le dispositif 7 comporte un capteur ou détecteur 8 de la présence d'une personne à l'intérieur du véhicule, dont l'effet sur le dispositif 1 peut être inhiber dans certaines conditions qui sont expliquées plus loin. L'inhibition est symbolisé par l'interrupteur 9 monté dans la liaison du capteur 8 au dispositif 1. Le dispositif 7 comporte en outre un élément interrupteur 10 qui symbolise la possibilité dans des conditions expliquées plus loin, d'empêcher que le dispositif 3 verrouille ou condamne les portes du véhicule. Le dispositif 7 est pourvu en outre d'un circuit logique symbolisé par une porte ET 12 à trois entrées a, b, et c, reliées respectivement au détecteur de présence 8 par l'intermédiaire d'un élément à retard 13 et au dispositif de protection 1. La porte 12 reçoit à ses entrées a, b, et c, les signaux indiqués en A, B, C sur ces figures 2 et 3. La sortie de la porte 12 est reliée à un élément tel qu'une bascule bistable 14 qui produit à sa sortie le signal D également représenté aux figures 2 et 3 et destiné à commander les éléments interrupteurs 9 et 10. Pour compléter la description de la figure 1, on constate que le signal E selon les figures 2 et 3 est le signal de commande du dispositif d'alarme 2, produit par le dispositif de protection 1.

Le procédé selon l'invention et le fonctionnement du système représenté à la figure 1 seront décrits ci-après en se référant aux figures 2 et 3. La courbe A représente le signal représentatif de l'état de veille du dispositif de protection. Celui-ci est adapté pour se mettre à l'état de veille par exemple après la coupure du circuit d'allumage du moteur, en prévoyant une temporisation permettant au conducteur de quitter le véhicule et de fermer les portes. Le détecteur ou capteur de présence 8 analyse l'intérieur du véhicule et produit le signal B indiquant la présence ou l'absence dans ce véhicule d'une ou de plusieurs personnes. Le signal B selon la figure 2 est le signal indiquant une telle présence. Ces deux signaux A et B parviendront aux entrées a et b de la porte ET 12. Le signal C est un signal de validation et est produit par le dispositif 1 après une durée de temps $\Delta T1$ après la mise en veille du dispositif 1 pendant la durée de temps $\Delta T2$.

Si pendant la durée de validation $\Delta T2$ le signal B est à l'état haut pendant une durée de temps supérieure à $\Delta T3$, comme à l'instant de temps T1 à la figure 2, la porte 12 reçoit à ses trois entrées simultanément des signaux hauts et engendre un signal de sortie qui fait basculer l'élément 14 et amène celui-ci à produire le signal D qui passe à l'état haut. Ce signal provoque l'ouverture de l'interrupteur 10, ce qui empêche le verrouillage définitif des portes par le dispositif 3 aussi longtemps que le dispositif 1 est à l'état de veille. L'intervalle T3 est choisi pour éviter une excitation de la porte 12 par des signaux parasites. Le passage du signal A à l'état bas indiquant la fin de l'état de veille provoque le basculement de l'élément 14. Le signal de sortie D de ce dernier passe alors à l'état bas. Le signal D est également utilisé pour inhiber le déclenchement d'une alarme par le détecteur de présence 8. Cette inhibition est symbolisée à la figure par l'ouverture de l'interrupteur 9 sous l'effet du signal D.

Par conséquent, le dispositif de protection 1 ne produit pas d'alarme bien que le détecteur de présence 8 ait constaté une condition qui normalement aurait dû entrainer le déclenchement d'une telle alarme. Le signal E à la sortie du dispositif de protection 1 est donc bas pendant toute la période que dure l'état de veille du système. Bien entendu si l'un des autres détecteurs par exemple 4 ou 5 détectait une condition d'alarme, cette constatation aménerait le dispositif 1 à activer le dispositif d'alarme 2.

La figure 3 illustre le fonctionnement du système lorsqu'il n'y a plus personne à l'intérieur du véhicule après la mise en veille du système. Il est essentiel pour le fonctionnement du système que pendant l'intervalle $\Delta T2$ du signal de validation C le signal produit par le détecteur de présence 8 ne produise aucune impulsion dont la durée est supérieure à l'intervalle de temps $\Delta T3$. Les quelques valeurs de crête du signal B qui sont représentées sont considérées comme des parasites et ne parviennent pas à la porte ET 12. De ce fait le signal de sortie de cette dernière et le signal D restent à l'état bas. Par conséquent il n'y a pas d'inhibition du dispositif de fermeture définitive 3 des portes et du détecteur de présence 8. Toute impulsion du signal de sortie B et du détecteur, postérieure à l'intervalle de validation $\Delta T2$ aboutira au déclenchement d'une alarme, comme le montre le signal E qui passe à l'état haut à l'instant de temps T2 sous l'effet de l'impulsion indiquée du signal de sortie B du détecteur de présence 8.

Le schéma de la figure 1 montre également que l'inhibition du détecteur de présence 8 après la détection d'une personne à l'intérieur du véhicule peut intervenir aussi pour un véhicule qui n'est pas équipé d'un dispositif de fermeture automatique des portes.

Bien entendu de nombreuses modifications peuvent être apportées au procédé et notamment au système tel que représenté à la figure 1. Il est à noter que la structure qui ressort de cette figure n'a été donné qu'à titre d'exemple, si bien que tout autre réalisation concrète du dispositif de conditionnement 7, selon l'invention, peut être envisagé qui soit en mesure de mettre en oeuvre le principe du procédé tel qu'il ressort des figures 2 et 3.

Ainsi la condition d'excitation de la porte ET 12 qui dans l'exemple représenté est constitué par l'intervalle de temps $\Delta T3$ pourrait être de toute autre nature appropriée et ainsi être réalisée sous forme d'un nombre prédéterminé d'impulsions par exemple émises par le détecteur de présence 8. Dans ce cas l'élément à retard 13 serait remplacé par un compteur approprié.

L'invention est aussi applicable à un véhicule automobile dans lequel la fermeture de la porte par exemple par le conducteur, après avoir mis en veille le système, entraîne automatiquement ou par une action appropriée du conducteur la fermeture définitive des portes. Dans ce cas, le signal d'actionnement D de l'interrupteur 10 provoquerait le déverrouillage des portes, c'est-à-dire invaliderait la décision de fermeture définitive des portes, qui a été faite auparavant.

## Revendications

1. Procédé pour conditionner un système de protection contre des intrusions et vols, notamment pour véhicule, et adapté pour être mis en veille à la suite d'une action de la part du conducteur du véhicule telle que la coupure de contact à l'aide de la clé de contact et la fermeture des portes du véhicule et pour déclencher une alarme à la suite de la détection d'une condition d'alarme, au dispositif de protection étant associé des détecteurs de conditions d'alarme adaptés pour produire un signal électrique d'excitation du dispositif de protection en vue du déclenchement d'une alarme à la suite de la détection d'une condition d'alarme pendant ladite période de mise en veille, caractérisé en ce que l'on utilise un détecteur de présence (8) susceptible d'analyser l'intérieur du véhicule pour détecter la présence d'une personne dans celui-ci et conditionne le dispositif de protection d'une façon prédéterminée lorsque la présence d'une personne a été détectée pendant un intervalle de temps de validation ($\Delta T2$) après la mise en veille du système.

2. Procédé selon la revendication 1, pour un véhicule comportant un dispositif de fermeture définitive des portes, caractérisé en ce que l'on conditionne le dispositif pour qu'il inhibe ou invalide le verrouillage définitif si la présence d'une personne a été détectée.

3. Procédé selon la revendication 1 ou 2, caractérisé en ce que l'on conditionne le dispositif pour qu'il inhibe le déclenchement d'une alarme après l'intervalle de validation ($\Delta T2$) précitée lorsque la présence d'une personne a été détectée pendant cet intervalle.

4. Système pour la mise en oeuvre du procédé selon la revendication précédente, caractérisé en ce qu'il comprend un dispositif de conditionnement (7) comprenant un circuit électrique (12, 14) susceptible de produire un signal de conditionnement du dispositif de protection (1) lors de la réception simultanée d'un signal (B) de la présence d'une personne à l'intérieur du véhicule, d'un signal (A) représentatif de l'état de veille du dispositif et d'un signal de validation (C).

5. Système selon la revendication 4, caractérisé en ce qu'il comprend un moyen d'inhibition ou d'invalidation (10) du dispositif de verrouillage définitif (3) des portes qui est adapté pour être commandé par le circuit électrique (12, 14) précité.

6. Système selon l'une des revendications 4 ou 5, caractérisé en ce qu'il comprend un moyen (9) adapté pour empêcher la transmission d'un signal produit par le détecteur de présence (8) au dispositif de protection (1) sous l'effet d'un signal de commande produit par le circuit électrique (12, 14) lorsque celui-ci reçoit simultanément les trois signaux (A, B, C) précités.

7. Système selon l'une des revendications 5 ou 6, caractérisé en ce que le circuit électrique comprend un circuit logique (12) et un élément de bascule à deux états stables (14), adaptés pour être commutés par le signal (A) représentatif de l'état de veille et le signal de sortie du circuit logique (12), le signal de sortie dudit organe de bascule commandant lesdits moyens d'inhibition (10) et les moyens (9) empêchant la réception d'un signal par le dispositif de protection (1) en provenance du détecteur de présence (8).

Fig. 1

Fig. 2

Fig. 3

EP 0 449 683 A1

**Office européen des brevets**

# RAPPORT DE RECHERCHE EUROPEENNE

Numero de la demande

EP 91 40 0560

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN vol. 12, no. 206 (M-708)(3053) 14 juin 1988, & JP-A-63 008048 (MATSUSHITA ELECTRIC) 13 janvier 1988, * le document en entier * | 1, 3 | B60R25/10 G08B29/16 |
| D,X | FR-A-2635396 (TEXTON) * le document en entier * | 1 | |

**DOMAINES TECHNIQUES RECHERCHES (Int. Cl.5)**

B60R
G08B

Le présent rapport a été établi pour toutes les revendications

| Lieu de la recherche | Date d'achèvement de la recherche | Examinateur |
|---|---|---|
| BERLIN | 05 JUIN 1991 | STANDRING, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

6